# EUROPÄISCHE PATENTANMELDUNG

(11) **EP 0 777 088 A1**
(43) Veröffentlichungstag der Anmeldung: **04.06.1997**
(21) Anmeldenummer: 95118976.0
(22) Anmeldetag: 01.12.1995
(51) Int. Cl.: F24F 5/00

(54) **Vorrichtung und Verfahren zum Gewinnen von Frischluft für die Luftkonditionierung**

(71) Anmelder: Merkl, Rupert, Dipl.-Ing., 86956 Schongau (DE)
(72) Erfinder: Merkl, Rupert, Dipl.-Ing., 86956 Schongau (DE)

(57) **Zusammenfassung**

Zur Einsparung von Energie beim Erwärmen oder Kühlen von Luft wird als Frischluft von Luft Gebrauch gemacht, die aus der Tiefe eines Kiesbettes oder dergleichen abgesaugt wird. Diese Luft besitzt als Folge der Erdwärme und des Grundwassers eine im wesentlichen über das ganze Jahr konstante Temperatur von etwa 12 °C. Durch Verwendung dieser auf etwa 12 °C temperierten Luft ergeben sich große Energieeinsparungen im Vergleich zu einer im Sommer beispielsweise 32 °C aufweisenden Außenluft und zu einer im Winter beispielsweise -23 °C aufweisenden Außenluft.

## Beschreibung

Beispielsweise in sogenannten Klimaanlagen wird Luft in der Weise konditioniert, daß angesaugte Außenluft auf die jeweils gewünschte Temperatur erwärmt bzw. gekühlt wird und daß diese Luft durch Befeuchten bzw. Trocknen auf die jeweils gewünschte relative Luftfeuchtigkeit gebracht wird.

Das Erwärmen bzw. Abkühlen wie auch das Befeuchten bzw. Trocknen von Luft erfordert einen beträchtlich hohen Energieeinsatz in Form von elektrischem Strom oder in Form fossiler Brennstoffe.

Der Erfindung liegt die Aufgabe Zugrunde, den Energiebedarf für das Konditionieren von Luft herabzusetzen.

Diese Aufgabe wird hinsichtlich der Vorrichtung durch den Gegenstand des Anspruchs 1 und wird hinsichtlich des Verfahrens durch den Gegenstand des Anspruchs 12 gelöst.

Bevorzugte Ausgestaltungen und Ausführungsformen der Erfindung sind in den Unteransprüchen angegeben.

Der mit Hilfe der Erfindung erzielbare technische Fortschritt ergibt sich in erster Linie daraus, daß als Frischluft Luft eingesetzt wird, welche durch die Erdwärme und das Grundwasser im wesentlichen über das ganze Jahr eine Temperatur von etwa 12 °C besitzt. Im Sommer kann diese ca. 8 bis 12 °C warme Luft zu Kühlzwecken verwendet werden und im Winter kann diese bereits auf etwa 10 °C temperierte Luft vorteilhaft zu Heizzwekken verwendet werden, da diese Luft nach Durchlauf einer konventionellen Wärmerückgewinnung nur noch lediglich um 4 °C erwärmt werden muß, um eine beispielsweise angestrebte Raumtemperatur von 20 °C zu erreichen.

Die Erfindung (Neuerung) wird im folgenden anhand von Ausführungsbeispielen und unter Bezug auf die Zeichnung näher beschrieben. In dieser zeigt:
- Fig. 1: eine schematische Darstellung einer Luftvorheizungs- und Kühlungsvorrichtung für Grundwassertiefen bis etwa 5 m und
- Fig. 2: eine Luftvorheizungs- und Kühlungsvorrichtung für Grundwassertiefen von mehr als 5 m.

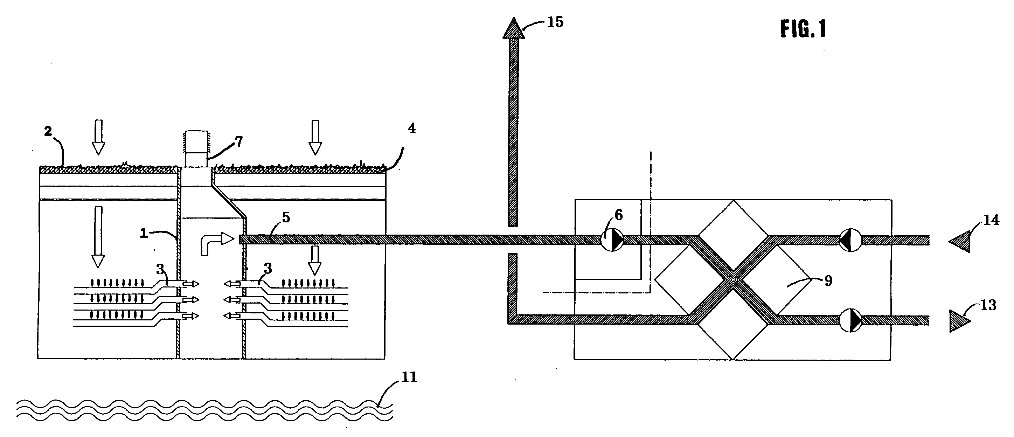

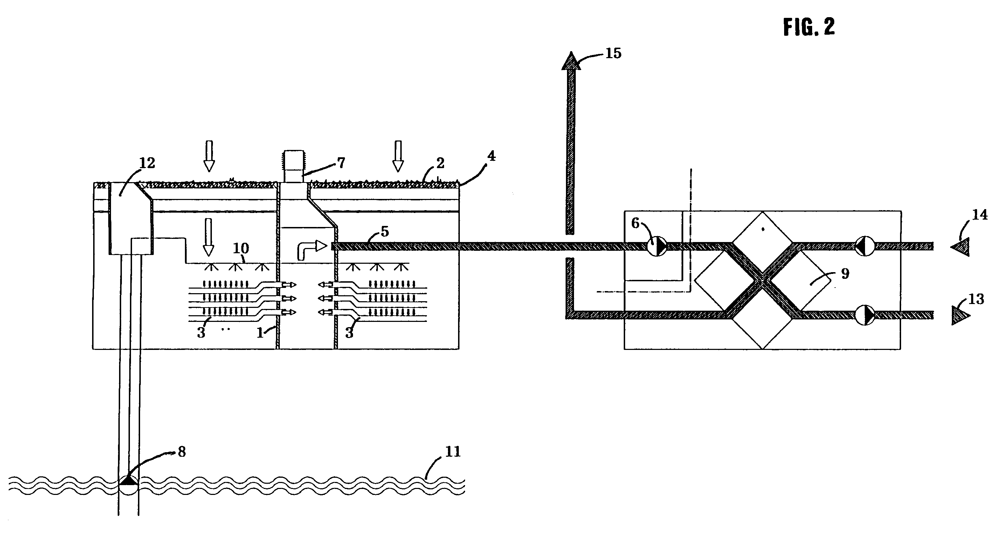

In den obengenannten beiden Figuren sind gleiche Bauteile mit übereinstimmenden Bezugszeichen versehen. Wie den Figuren 1 und 2 zu entnehmen, ist mit seiner (nicht dargestellten) Längsachse senkrecht zur Erdoberfläche ein nach unten offener Luftschacht 1 im Erdreich aufgenommen. Das untere offene Ende des Luftschachtes 1 befindet sich etwa 3 m unterhalb der Erdoberfläche 2. In einem Abstand von etwa 2,30 m bis 2,90 m von der Erdoberfläche 2 mündet in den Luftschacht 1 wenigstens eine vorzugsweise parallel zur Erdoberfläche orientierte Lage von mit nicht dargestellten Lufteintrittsöffnungen versehenen Rohren, vorzugsweise in Form des sogenannten Drain-Rohres DN100. Wie in den Figuren 1 und 2 schematisch dargestellt, verlaufen diese mit Lufteintrittsöffnungen versehenen Drainagerohre 3 im wesentlichen waagerecht, wobei in den Figuren 1 und 2 drei Lagen von Drainagerohren 3 übereinander angeordnet sind. Je Lage hat sich eine Anzahl von 14 Drainagerohren als vorteilhaft herausgestellt.

Vorteilhafterweise werden die Lagen dieser Rohre 3 so angeordnet, daß sich der Luftschacht 1 im Zentrum befindet und daß, ausgehend von diesem Zentrum, sich die Rohre 3 in waagerechten Ebenen nach außen erstrecken.

Von der Erdoberfläche 2 bis zum unteren Ende des Luftschachtes 1 erstreckt sich rings um den Luftschacht ein Kiesbett oder dergleichen, auf dessen Oberfläche sich eine Humusschicht 4 mit Grasnarbe erstreckt. Das Kiesbett hat beispielsweise eine Oberfläche von 3 x 8 m, wobei sich das obere Ende des Luftschachtes 1 im wesentlichen im Mittelpunkt dieser Kiesbettoberfläche befindet. Das Kiesbett oder ein anderes geeignetes Material dient als Filterbett für die im Schacht 1 zu sammelnde Luft.

Die Humusschicht 4 mit Grasnarbe hat eine Dicke von vorzugsweise ca. 10 cm. Darunter erstreckt sich eine vorteilhafterweise etwa 20 cm dicke Schicht aus gebrannten Blähtonkugeln, darunter eine gleichfalls vorzugsweise 20 cm dicke Schicht aus Filterkies mit einer Körnung von 10 bis 15 mm. Daran schließt sich nach unten an eine vorzugsweise 2,50 bis 3,50 m dicke Rollierung, in deren unteren Schichten die wenigstens eine Lage von Drainagerohren 3 vorgesehen ist. In dem Bereich, in welchem die Drainagerohre 3 in den Luftschacht 1 münden, besitzt dieser Luftschacht vorzugsweise einen Durchmesser von etwa 150 cm. Im in Fig. 1 schematisch dargestellten Ausführungsbeispiel verläuft das Grundwasser auf einer Tiefe von weniger als 5 m, d.h. nicht zu weit entfernt vom unteren Ende des Luftschachtes 1. Oberhalb der Drainagerohre 3, aber noch gut innerhalb der Rollierungsschicht, ist die Außenwandung des Luftschachtes 1 von wenigstens einem Absaugrohr 5 durchsetzt, dessen lichter Querschnitt sich nach der aus dem Luftschacht zu fördernden Luftmenge richtet. Im dargestellten Ausführungsbeispiel besitzt das Luftabsaugrohr 5 einen Innendurchmesser von etwa 40 cm.

Vorteilhafterweise besteht der Luftschacht 1 aus einer Vielzahl von jeweils zueinander beabstandeten Ringen, wobei die Rohre 3 in den Freiräumen zwischen den Ringen in das Innere des Luftschachtes 1 münden.

Die vorstehend beschriebene Vorrichtung mit Luftschacht 1, im Erdreich oder einem Kiesbett verlegten Drainagerohren 3 und einem oberhalb der Drainagerohre an den Luftschacht 1 angeschlossenen Luftabsaugrohr 5 wird im folgenden auch als "Luftbrunnen" bezeichnet.

Wird an das Luftabsaugrohr 5 ein Saugventilator, beispielsweise der in den Figuren dargestellte Ventilator 6, angeschlossen, so kann aus dem Luftschacht 1 Luft gefördert werden, die über das ganze Jahr eine im wesentlichen konstante Temperatur von etwa 8 bis 12 °C aufweist. Diese Luft gelangt aus dem die Drainagerohre 3 umgebenden Erdreich oder Kiesbett in die Drainagerohre 3 und aus diesen in den Luftschacht 1. Die aus dem Luftschacht 1 geförderte Luft besitzt etwa 90 % relative Feuchte, da einerseits das Erdreich über eine natürliche Feuchte verfügt und andererseits durch Regenwasser und Tau von der Erdoberfläche her Feuchtigkeit nachgeliefert wird.

Diese aus dem Luftschacht 1 geförderte Frischluft mit einer Temperatur von konstant etwa 12 °C ist im Sommer deutlich kühler als die beispielsweise 25 bis 35 °C aufweisende Außenluft und ist im Winter deutlich wärmer als die bei Frostperioden, beispielsweise -16 °C, aufweisende Außenluft. Mithin steht im Sommer eine etwa 12 °C kühle Frischluft zur Verfügung, ohne daß diese Frischluft durch Energieeinsatz aus der beispielsweise 25 bis 35 °C warmen Außenluft gewonnen werden muß. Entsprechend steht im Winter eine bereits auf etwa 8 bis 10 °C "vorgewärmte" Luft zur Verfügung, ohne daß diese durch Einsatz von Energie aus der Minustemperaturen aufweisenden Außenluft gewonnen werden muß.

Das obere Ende des Luftschachtes 1 kann mit einer Außenlufthaube 7 verschlossen sein, die bei Außentemperaturen von mehr als 12 °C sowie bei Außentemperaturen von weniger als 20 °C geöffnet werden kann, um im Heizfall die Außenluft nicht abzukühlen.

Befindet sich das Grundwasser auf einer Tiefe von bis zu 5 m, so reicht die vom Grundwasser 11 als natürlichem Energielieferanten gelieferte Heiz- bzw. Kühlenergie aus, um die Temperatur von etwa 12 °C in der aus dem Luftschacht 1 geförderten Luft zu gewährleisten. Bei tieferen Grundwasserspiegeln kann die gewünschte Temperatur wie auch die gewünschte Luftfeuchte mit der in Fig. 1 dargestellten Anordnung gelegentlich nicht erreicht werden.

Für einen solchen Fall, d.h. für Grundwassertiefen von mehr als 5 m, ist die in Fig. 2 schematisch dargestellte Ausführungsform vorgesehen, welche sich von der anhand von Fig. 1 beschriebenen Ausführungsform im wesentlichen lediglich dadurch unterscheidet, daß zusätzlich eine in das Grundwasser 11 reichende Grundwasserpumpe 8 vorgesehen ist, mit deren Hilfe Grundwasser in ein schematisch mit dem Bezugszeichen bezeichnetes Grundwasserverteilsystem förderbar ist. Dieses Grundwasserverteilsystem verläuft oberhalb der wenigstens eine Lage von Drainagerohren 3 und ist mit einer Vielzahl von in der Zeichnung schematisch dargestellten Wasseraustrittsöffnungen versehen, die im Einzugsbereich der Drainagerohre 3 liegen. Auf diese Weise kann mit Hilfe der Grundwasserpumpe 8 eine konstante Temperatur aufweisendes Grundwasser den Drainagerohren 3 und damit dem Luftschacht 1 zugeführt werden.

Oberhalb der Grundwasserpumpe ist in Fig. 2 ferner schematisch ein Revisionsschacht 12 für die Grundwasserfördereinrichtung vorgesehen. Die Regelung der Grundwasserpumpe 8 kann von einer nicht dargestellten Temperaturschaltung übernommen werden.

Im folgenden wird die Verwendung des erfindungsgemäßen Luftbrunnens zunächst für das Erwärmen von Luft (Heizfall) und sodann für das Kühlen von Luft (Kühlfall) anhand der Figuren 1 und 2 beschrieben. Wie den Figuren zu entnehmen, gelangt die mit Hilfe des Luftabsaugrohres 5 herbeigeführte Frischluft über den Ventilator 6 in den vorzugsweise als Kreuzstromwärmetauscher 9 ausgebildeten Wärmetauscher einer Luftkonditionierungsanlage. In diesem Wärmetauscher 9 gibt die aus einem klimatisierten Raum abgeführte Abluft (Pfeil 14) ihre Wärme an die aus den vorstehend erörterten Gründen bereits auf etwa 12 °C vorgewärmte Frischluft ab, wodurch eine konditionierte Zuluft (Pfeil 13) entsteht, die in die zu klimatisierenden Räume eingespeist werden kann. Wie den Figuren zu entnehmen, wird die Abluft nach Wärmetausch mit der Frischluft als Fortluft (Pfeil 15) abgeführt. Die vorstehend erwähnte Zuluft kann beispielsweise mit Hilfe einer kontrollierten Wohnraumlüftung auf die angestrebte Raumtemperatur erwärmt werden. Im **Heizfall** strömt Außenluft mit niedrigen Temperaturen, beispielsweise Frosttemperaturen, und geringer absoluter Feuchte in die Anlage ein. Diese Luft wird aus dem Luftbrunnen mit einer Temperatur von etwa 12 °C, wenigstens jedoch 9 °C, und mit 90 % relativer Luftfeuchte abgezogen. Nach dem Eintritt in einen an sich bekannten Kreuzstromwärmetauscher 9 erwärmt sie sich durch im Kreuzstrom herangeführte warme Abluft 14 aus einem klimatisierten Raum. Wird diese nun eine Temperatur von 16 °C aufweisende Luft anschließend auf 20 °C Raumtemperatur erwärmt, so verfügt diese Luft noch über 45 bis 55 % rel. Luftfeuchte, also über eine rel. Feuchtigkeit im sogenannten Komfortbereich.

Wird beispielsweise davon ausgegangen, daß die Außenlufttemperatur -16 °C beträgt, so wird augenscheinlich, daß bei Verwendung des erfindungsgemäßen Luftbrunnens und eines Kreuzstromwärmetauschers lediglich noch Heizenergie aufzubringen ist, um diese Luft von +16 °C auf Raumtemperatur zu bringen, da die Luft von -16 °C bis +16 °C ohne Energieeinsatz erwärmt worden ist.

Die Temperatursteigerung beträgt im Heizbetrieb maximal 28 K, und die maximale Befeuchtungsleistung beträgt 7 g/kg Luft. Die auf 20 °C erwärmte Luft hat eine rel. Feuchte von 45 bis 55 %, so daß in den mit dieser Luft versorgten Räumen ein angenehmes Raumklima herrscht.

Im **Kühlfall** strömt warme Außenluft von beispielsweise 32 °C und hoher absoluter Feuchte in die Anlage ein. Im Luftbrunnen wird diese warme Sommerluft auf 11 bis 12 °C abgekühlt und auf etwa 90 % rel. Luftfeuchte entfeuchtet. Diese durch das Luftabsaugrohr 5 aus dem Luftbrunnen geförderte Luft erwärmt sich im Kreuzstromwärmetauscher 9 auf 16 bis 18 °C. Wird diese Luft anschließend auf 22 bis 24 °C Raumtemperatur gebracht, so weist sie eine rel. Luftfeuchte von 42 bis 55 % auf und liegt somit im sogenannten Komfortbereich.

Die Temperaturerniedrigung beträgt maximal 20 K, und die maximale Entfeuchtungsleistung im Kühlbetrieb beträgt 8,5 g/kg Luft.

Bei Verwendung des erfindungsgemäßen Luftbrunnens zusammen mit einem Wärmetauscher können Kältemaschinen bei einer normalen Raumluftkühlung gänzlich entfallen, was sich in einer beträchtlichen Energieeinsparung auswirkt.

Die aus dem Luftbrunnen geförderte Luft ist nahezu steril, d.h. praktisch keim- und pollenfrei.

Der erfindungsgemäße Luftbrunnen bietet Vorteile auch für die Reinstlufträume benötigende Industrie sowie für chirurgische Operationsfelder.

Der im Vorstehenden als Ausführungsbeispiel beschriebene Luftbrunnen mit einer Kiesbettoberfläche von 24 m² (3 m x 8 m Kantenlänge) erbrachte bei einer Antriebsleistung des Ventilators 6 von 1000 Watt eine Fördermenge von 4000 m³/h von im Luftbrunnen auf 12,6 °C erwärmter Luft (Außenlufttemperatur +2 °C). Generell kann beim Luftbrunnenprinzip ein Bedarf von etwa 6 m² Kiesbettoberfläche für 1000 m³/h auf etwa 12 °C vorgewärmte Luft zugrunde gelegt werden.

Es ist ein Merkmal der Erfindung, daß die Speicherkapazität des gesamten Kiesbettes im vollen Umfange genutzt wird und somit die Austauschfläche zum Grundwasser um ein Vielfaches vergrößert wird.

## Patentansprüche

1. Vorrichtung zum Gewinnen von Frischluft, insbesondere für Luftkonditionierungsanlagen, **dadurch gekennzeichnet,** daß eine in einem Kiesbett oder dergleichen angeordnete Luftfördereinrichtung (1, 3, 5, 6) vorgesehen ist, mit deren Hilfe die im Kiesbett durch Erdwärme und Grundwasser konstant auf etwa 12 °C temperierte Luft förderbar ist, wobei die Luftfördereinrichtung innerhalb des Kiesbettes einen Luftschacht (1), wenigstens ein in den Luftschacht mündendes, mit Lufteinlaßöffnungen versehenes Rohr (3) sowie ein an den Luftschacht (1) angeschlossenes Luftabsaugrohr (5) umfaßt, **dadurch gekennzeichnet,** daß wenigstens eine Lage von mit Lufteintrittsöffnungen versehenen Rohren in einer im wesentlichen waagerechten Ebene vorgesehen ist, in deren Mitte der von diesen Rohren gespeiste Luftschacht (1) angeordnet ist.

2. Vorrichtung nach Anspruch 1, **dadurch gekennzeichnet,** daß die mit Lufteinlaßöffnungen versehenen Rohre (3) an sich bekannte Drainagerohre sind.

3. Vorrichtung nach Anspruch 1, **dadurch gekennzeichnet,** daß im Luftabsaugrohr (5) eine Luftfördereinrichtung (6), vorzugsweise in Form eines Ventilators, vorgesehen ist.

4. Vorrichtung nach Anspruch 3, **dadurch gekennzeichnet,** daß das Luftabsaugrohr (5) mit seinem dem Luftschacht (1) abgewandten Ende an einen Wärmetauscher (9) einer Luftkonditionierungsanlage angeschlossen ist.

5. Vorrichtung nach einem der Ansprüche 1 bis 4, **dadurch gekennzeichnet,** daß der Luftschacht (1) senkrecht zur Erdoberfläche (2) orientiert in dem Kiesbett aufgenommen ist.

6. Vorrichtung nach Anspruch 5, **dadurch gekennzeichnet,** daß das obere Ende des Luftschachtes (1) im wesentlichen mit der Erdoberfläche (2) fluchtet und daß das untere Ende des Luftschachtes etwa 3 m unterhalb der Erdoberfläche angeordnet ist.

7. Vorrichtung nach Anspruch 5 oder 6, **dadurch gekennzeichnet,** daß das obere Ende des Luftschachtes (1) mit einer im Abhängigkeit von der Außentemperatur zu öffnenden Haube (7) verschlossen ist, die im geöffneten Zustand den gesteuerten/geregelten Zutritt von Außenluft in den Luftschacht (1) gestattet.

8. Vorrichtung nach einem der Ansprüche 1 bis 7, **dadurch gekennzeichnet,** daß sich auf dem Kiesbett eine Humusschicht (4) mit Grasnarbe befindet.

9. Vorrichtung nach einem der Ansprüche 1 bis 8, **dadurch gekennzeichnet,** daß eine in das Grundwasser reichende Grundwasserpumpe (8) vorgesehen ist, mit deren Hilfe Grundwasser in das Kiesbett förderbar ist.

10. Verfahren zum Gewinnen von Frischluft, insbesondere für Luftkonditionierungsanlagen, **dadurch gekennzeichnet**, daß aus der Tiefe eines Kiesbettes oder dergleichen Luft abgesaugt und als Frischluft verwendet wird, wobei die abgesaugte Luft durch Erdwärme und Grundwasser konstant auf etwa 12 °C temperiert ist und das Kiesbett als Keim- und Pollenfilter sowie als Luftbefeuchter dient.

11. Verfahren nach Anspruch 10, **dadurch gekennzeichnet**, daß in dem Kiesbett Luft mit Hilfe von Drainagerohren (3) und einem Luftsammelschacht (1) gesammelt und dem Wärmetauscher (9) einer Luftkonditionierungseinrichtung zugeführt wird.

12. Verfahren nach Anspruch 10 oder 11, **dadurch gekennzeichnet**, daß bei Grundwassertiefen von mehr als etwa 5 m mit Hilfe einer Pumpe (8) Grundwasser in das Kiesbett eingeführt wird.

13. Verfahren nach Anspruch 11 oder 12, **dadurch gekennzeichnet,** daß die Speicherkapazität des gesamten Kiesbettes im vollen Umfange genutzt wird und somit die Austauschfläche zum Grundwasser um ein Vielfaches vergrößert wird.
